# FASCICULE DE BREVET EUROPEEN

(11) **EP 0 533 595 B1**
(45) Date de publication et mention de la délivrance du brevet: **29.05.1996**
(21) Numéro de dépôt: 92420306.0
(22) Date de dépôt: 10.09.1992
(51) Int. Cl.: G01N 29/04, G01N 27/90, G01N 29/26

(54) **Dispositif de contrôle non destructif de produits longs métalliques de révolution et procédé pour sa mise en oeuvre**
Verfahren und Vorrichtung zur zerstörungsfreien Prüfung von langen, zylindrischen, metallischen Gegenständen
Method and device for the non-destructive testing of long, cylindrical, metallic objects

(30) Priorité: 12.09.1991 FR 9111463
(43) Date de publication de la demande: 24.03.1993
(73) Titulaire: VALTUBES, F-92100 Boulogne-Billancourt (FR)
(72) Inventeur: Joet, François Fernand, F-21140 Semur en Auxois (FR); Tailleux, Olivier, F-59620 Aulnoye-Aymeries (FR)
(74) Mandataire: Desolneux, Jean-Paul Charles

(56) Documents cités:
- EP-A- 0 119 697
- GB-A- 1 102 940
- US-A- 3 603 874
- PATENT ABSTRACTS OF JAPAN vol. 14, no. 438 (P-1108) 19 Septembre 1990 & JP-A-02 173 561
- PATENT ABSTRACTS OF JAPAN vol. 9, no. 210 (P-383)(1933) 28 Août 1985 & JP-A-60 071 947

## Description

Le dispositif et le procédé qui font l'objet de l'invention concernent le contrôle non destructif de produits longs métalliques, de révolution et, plus particulièrement, de tubes de révolution. Ce dispositif et ce procédé s'appliquent à la détection, au défilé, de discontinuités dans la structure du métal, constituées par exemple par des fissures, internes ou externes, des porosités, des inclusions, des soufflures, des décollements de soudures ou autres.

Ce dispositif et ce procédé s'appliquent essentiellement aux méthodes de détection qui consistent à mettre en oeuvre des moyens de détection de discontinuités disposés latéralement par rapport au produit long qu'on déplace d'un mouvement relatif, suivant un axe de défilement, tout en l'entraînant en rotation autour de cet axe, afin d'assurer un contrôle général de toute la section du produit sur toute sa longueur. Ce dispositif et ce procédé s'appliquent par exemple aux méthodes de détection de discontinuités par ultra-sons ou par courants de Foucault, ou par flux de fuite.

L'expérience montre que, si on veut être en mesure de détecter des discontinuités, même de relativement faibles dimensions, avec une relative sécurité, il est important d'utiliser des moyens de détection de petites dimensions tout en entraînant le produit en un mouvement de translation selon son axe et de rotation autour de son axe à la vitesse voulue compatible avec la dimension des moyens de détection. Ces moyens de détection ont de préférence par exemple une largeur, mesurée parallèlement à l'axe de défilement, pas supérieure à la longueur de la discontinuité, lorsque celle-ci a une extension longitudinale. Par ailleurs, chaque méthode de détection comporte des limites concernant la vitesse relative de déplacement de la paroi du produit long par rapport au moyen de détection, limites au-delà desquelles la sécurité de détection des discontinuités n'est plus assurée. De plus des perturbations plus ou moins importantes sont entraînées par le passage de l'extrémité avant ou arrière du produit long au voisinage immédiat du moyen de détection, perturbations qui risquent d'être considérées comme correspondant à une discontinuité ou encore qui risquent de masquer une discontinuité.

Des perturbations de ce type sont particulièrement importantes lorsqu'une liaison par un fluide, tel que de l'eau, doit être réalisée entre le moyen de détection et la paroi en regard du produit long ; c'est le cas de la détection de défauts par ultra-sons. On constate alors, dans bien des cas, que, à la vitesse de défilement utilisée, le bord frontal du produit long crée dans le fluide de liaison une vague qui provoque, au niveau du moyen de détection, un signal qui, au niveau du moyen d'enregistrement peut être confondu avec une discontinuité du métal ou encore masquer une telle discontinuité.

Pour éviter des erreurs, on admet, dans bien des cas, qu'une zone plus ou moins longue, à chacune des deux extrémités du produit long, doit être neutralisée, au cours du contrôle en série de produits longs, pour éviter la non-détection de discontinuités inacceptables.

On est alors obligé, soit d'effectuer un contrôle spécial dans des conditions particulières de ces zones d'extrémité, soit de chuter celles-ci sur des longueurs relativement importantes. Dans un cas comme dans l'autre ceci entraîne une forte augmentation du coût de ce contrôle.

Cette augmentation est particulièrement sensible dans le cas où, en vue d'accroître la vitesse de défilement sans réduire la sécurité et la sensibilité de détection on met en oeuvre un groupe de moyens de détection disposés côte à côte parallèlement à l'axe de défilement. On utilise alors des moyens de détection semblables, de petites dimensions, orientés de la même façon par rapport à la paroi du produit long, et on détermine le rapport entre les vitesses de translation et de rotation du produit long de façon que chacun des moyens de détection effectue en regard de la paroi extérieure du produit long, d'un mouvement relatif, un parcours hélicoïdal adjacent à celui du ou des moyens de détection à côté duquel ou desquels il se trouve. Même en acceptant un recouvrement partiel de ces parcours hélicoïdaux, pour accroître la sécurité de détection, on accélère considérablement la vitesse de translation tout en ne dépassant pas la vitesse relative de déplacement du moyen de détection en regard de la paroi extérieure du produit long.

On constate, en mettant ainsi en oeuvre un groupe de moyens de détections identiques, qu'il suffit que le fonctionnement d'un seul des moyens de détection de ce groupe soit perturbé par la proximité de l'extrémité avant ou arrière du produit long pour que cette perturbation se répercute, au niveau du moyen d'enregistrement, sur toute la longueur du produit long correspondant à ce pas d'avance et même au-delà. Pour des raisons de simplicité d'exploitation, on n'utilise en effet qu'une seule piste d'enregistrement pour les signaux délivrés par l'ensemble des moyens de détection du groupe.

Il est de plus nécessaire de tenir compte de la relative imprécision de la détermination des instants du passage des extrémités avant et arrière des produits à contrôler en ajoutant une certaine longueur de sécurité. On constate ainsi, par exemple, en effectuant le contrôle automatique de tubes métalliques, que la longueur de tube non contrôlée au voisinage des extrémités peut atteindre couramment 100 à 200 mm ou d'avantage et qu'il est donc nécessaire de contrôler ces longueurs d'extrémité par d'autres moyens ou alors de les chuter.

On a recherché la possibilité de réduire considérablement la longueur de la zone d'extrémité non contrôlée sans avoir à renoncer à l'accroissement des vitesses de défilement résultant de la mise en parallèle de plusieurs moyens de détection identiques côte à côte et sans avoir non plus à multiplier le nombre des voies d'enregistrement. On a cherché plus particulièrement à éviter que les signaux de discontinuités ou de défauts correspondant à des discontinuités ou à des défauts effectifs de produits longs dans des zones voisines des extrémités de ceux-ci, soient masqués par des signaux résultant de perturbations provoquées par le passage des extrémités avant ou arrière du produit long.

On a recherché plus particulièrement la possibilité de résoudre un tel problème dans le cas de la détection de discontinuités ou de défauts dans des produits longs métalliques par des moyens de détection par ultra-sons et plus précisément dans des tubes métalliques soudés ou sans soudure de révolution.

Le dispositif et le procédé qui font l'objet de l'invention permettent de résoudre les problèmes ci-dessus exposés.

Ce dispositif et ce procédé s'appliquent, de la façon la plus générale à la détection de discontinuités ou défauts de structure présentés par des produits métalliques longs, de révolution, par des méthodes non destructives physiques comportant des moyens d'émission, des moyens d'excitation capables de provoquer des interactions avec ces discontinuités ou défauts et au moins un groupe de moyens de détection de ces interactions disposés latéralement côte à côte le long d'un axe de défilement du produit long. Le dispositif comporte des moyens permettant de déplacer le produit long en translation et rotation sur lui-même d'un mouvement relatif hélicoïdal, les moyens de détection constituant le groupe ayant la même fonction, la même structure et étant disposés pour détecter des défauts d'un même type dans La paroi en regard du produit long autour de laquelle ils effectuent ainsi, de façon relative, des parcours adjacents en hélice. Un tel dispositif est par exemple décrit dans le document GB-A-1 102 940.

Suivant l'invention, dans le but d'assurer le contrôle des zones d'extrémité avant et arrière du produit long une caméra CCD (charge coupled device) dont l'axe optique, orienté transversalement par rapport à l'axe de défilement du tube, est disposé de façon que son champ d'observation soit traversé par l'axe de défilement du produit long, des moyens électroniques de mémorisation permettant de mettre en mémoire l'emplacement exact de chacun des moyens de détection du groupe le long de l'axe de défilement, moyens de détection dont les positions repères par rapport à l'axe de défilement se trouvent dans le champ d'observation de la caméra CCD. Ces positions repères qui correspondent à la largeur de chacun des moyens de détection mesurée parallèlement à l'axe de défilement, sont déterminées en pixels sur l'échelle des abscisses parallèle à l'axe de défilement du champ de la caméra et correspondent pour chaque moyen de détection à son bord latéral amont et à son bord latéral aval. Les moyens électroniques comportent également des moyens de contrôle du passage à travers le champ de la caméra CCD de l'extrémité avant puis de l'extrémité arrière du produit long, passage contrôlé point par point en pixels à chaque instant le long de l'échelle des abscisses. Ainsi des moyens électroniques de commande permettent, au cours du passage de l'extrémité avant du produit long, dans le champ de la caméra, de mettre en circuit, de façon indépendante, chacun des moyens de détection en le reliant ainsi au moyen d'enregistrement du groupe, au plus tôt à partir de l'instant du franchissement par l'extrémité avant du produit long du point de l'axe de défilement dont l'abscisse en pixels correspond au bord latéral aval de ce moyen de détection, et permettent ensuite, lorsque l'extrémité arrière du produit long arrive dans le champ de la caméra, la mise hors-circuit de chacun de ces moyens de détection, de façon également indépendante au plus tard, au moment du franchissement par cette extrémité arrière du point d'abscisse en pixels correspondant au bord latéral amont de chacun de ces moyens de détection.

Par bord latéral amont, on entend le bord latéral du moyen de détection situé côté amont dans le sens de défilement axial du produit long. Par bord latéral aval, on entend le bord latéral du moyen de détection situé côté aval dans le sens de défilement axial du produit long.

De préférence, en fonction des caractéristiques particulières des méthodes de détection utilisées, la mise en circuit de chaque moyen de détection est effectuée avec un retard déterminé expérimentalement et exprimée par un décalage défini en pixels sur l'axe des abscisses par rapport au point de franchissement par l'extrémité avant du produit long du point correspondant au bord latéral aval du moyen de détection. De même la mise hors circuit de chaque moyen de détection est effectuée avec une avance déterminée exprimée en pixels par rapport au point de franchissement par l'extrémité arrière du produit long du point d'abscisse en pixels correspondant au bord latéral amont de chaque moyen de détection.

De préférence également, on assure la sécurité de suivi des extrémités du produit long par la caméra CCD en utilisant un moyen d'éclairage orienté de façon à éclairer fortement le côté du produit long qui est vu au passage dans le champ de la caméra et on dispose un écran absorbant la lumière également dans le champ de la caméra, au-delà de l'axe de défilement par rapport à celle-ci.

Le groupe de moyens de détection est, de façon particulièrement avantageuse, un groupe de moyens transducteurs à ultra-sons, chacun de ces moyens transducteurs comportant au moins un moyen d'émission d'ultra-sons et/ou au moins un moyen de réception d'ultra-sons combiné ou non avec le moyen d'émission dans un même transducteur.

L'invention concerne également le procédé qui permet la mise en oeuvre du dispositif suivant l'invention. De très nombreuses variantes ou adaptations sont possibles qui ne sortent pas du domaine de l'invention.

L'exemple et les figures ci-après décrivent, de façon non limitative, un mode particulier de réalisation du dispositif et du procédé suivant l'invention.

La figure 1 est une vue montrant les conditions de réalisation du dispositif suivant l'invention en ce qui concerne le contrôle du défilement du produit long par caméra CCD.

La figure 2 est un schéma des conditions de réalisation des moyens électroniques assurant la mise en oeuvre, suivant l'invention, des moyens de détection des discontinuités de structure des produits longs.

Les figures 3A et 3B montrent des enregistrements de signaux émis par un groupe de moyens de détection au voisinage de l'extrémité avant d'un même produit long comparant les résultats obtenus sans utiliser le dispositif suivant l'invention (figure 3A) ou en utilisant ce dispositif (figure 3B).

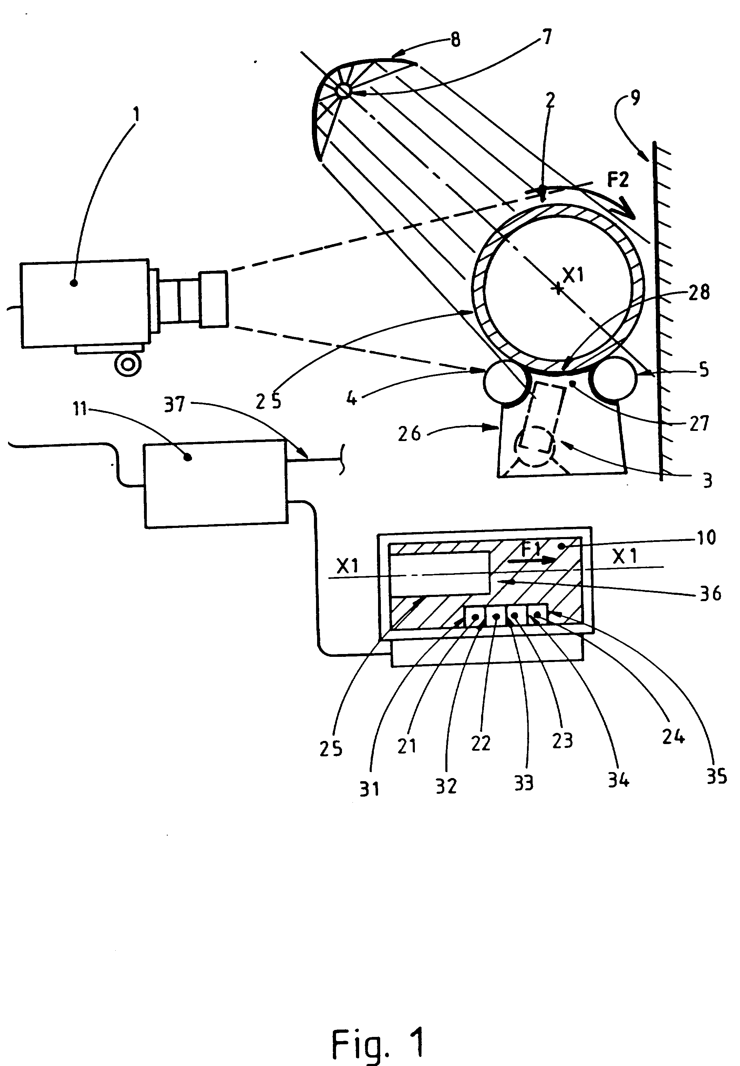

La figure 1 est une vue générale montrant la disposition relative de la caméra CCD 1 et du produit long 2 dans le cas où ce dernier est un tube métallique et où le groupe de moyens de détection 3 est un groupe de transducteurs à ultra-sons. La caméra CCD est de préférence une caméra matricielle.

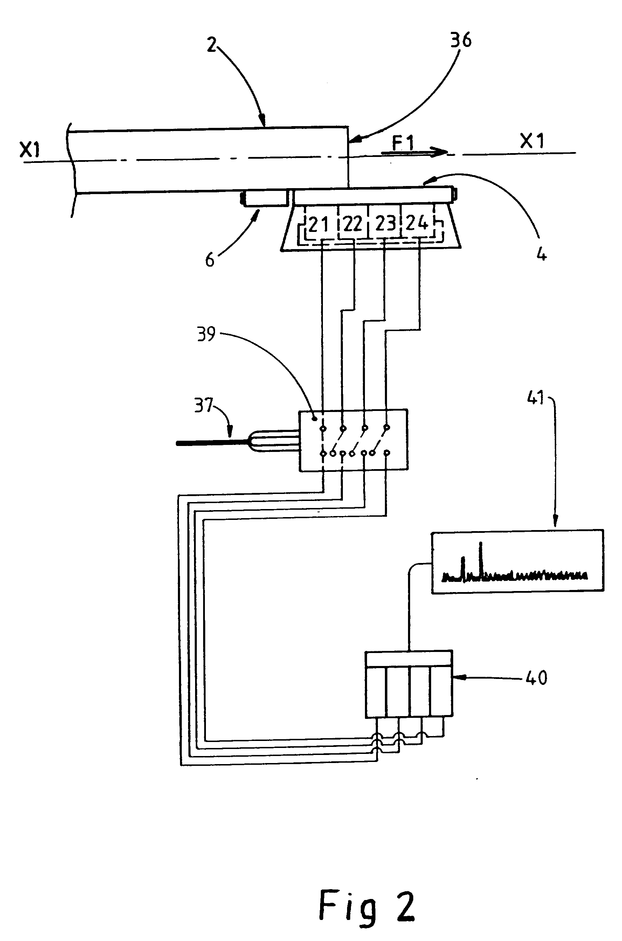

Comme le montre cette figure 1 le tube métallique de révolution défile suivant un axe X1 perpendiculaire au plan de cette figure. Des moyens de translation non représentés assurent son déplacement suivant la flèche F1 le long de l'axe X1-X1 ( voir aussi figure 2) à une vitesse déterminée. Des moyens d'entraînement en rotation non représentés actionnent les rouleaux tels que 4, 5, 6 qui font tourner le tube suivant la flèche F2 autour de l'axe X1-X1, la paroi de ce tube effectuant ainsi un parcours hélicoïdal. Un tube luminescent 7 muni d'un réflecteur 8 éclaire le tube métallique 2 du côté visé par la caméra CCD 1. Un écran opaque 9 placé de l'autre côté de l'axe X1-X1 par rapport à la caméra crée un fond sombre comme on le voit sur l'écran de projection 10 relié à la caméra par les moyens électroniques 11. L'écran 9 fait apparaître les extrémités de quatre transducteurs émetteurs récepteurs 21, 22, 23, 24 qui constituent le groupe de moyens de détection 3 mis en oeuvre dans le dispositif et le procédé suivant l'invention. Ces quatre transducteurs sont identiques et orientés parallèlement en direction de la paroi extérieure 25 du tube 2 pour détection des discontinuités longitudinales, telles que par exemple des fissures. Ce groupe de transducteurs 3 est contenu dans un bac 26 contenant de l'eau jusqu'au niveau voulu pour remplir l'intervalle 27 entre les transducteurs et la paroi 25 en regard du tube 2. Les fuites d'eau entre les bords du bac et la paroi du tube sont limitées par des lèvres en élastomère indiquées en 28 et compensées par des apports d'eau non représentés.

Les moyens électroniques 11 comportent les moyens d'entrée nécessaires pour mémoriser l'emplacement exact des bords latéraux 31, 32, 33, 34, 35 de chacun des quatre transducteurs 21, 22, 23, 24 le long de l'axe X1-X1, dans le champ de la caméra 1 tel qu'on le voit sur l'écran de projection 10. Dans le cas de la présente caméra CCD 1, le groupe de quatre transducteurs 21, 22, 23, 24, ayant chacun une largeur individuelle de 10 mm, occupe une largeur de 40 mm. Dans le cas de la figure 1, la largeur de chaque transducteur correspond à une longueur en pixels de 60 pixels et leur position repérée sur la ligne des abscisses, parallèle à X1-X1 est celle indiquée dans le tableau I ci-dessous :

**TABLEAU I :**

| | Bord latéral amont | repère en pixels | bord latéral aval | repère en pixels |
|---|---|---|---|---|
| Transducteur 21 | 31 = | 200 | 32 = | 260 |
| Transducteur 22 | 32 = | 260 | 33 = | 320 |
| Transducteur 23 | 33 = | 320 | 34 = | 380 |
| Transducteur 24 | 34 = | 380 | 35 = | 440 |

les transducteurs étant côte à côte le bord latéral aval du précédent est le bord latéral amont du suivant.

Dans le cas d'un tel groupe de moyens de détection, les essais ont montré qu'il n'est pas nécessaire de décaler la mise en circuit de chacun des transducteurs au-delà du point de franchissement par l'extrémité avant 36 du tube métallique 2 du bord latéral aval tel que 32 de chaque transducteur tel que 21. On voit sur l'écran 10 que l'extrémité avant 36 du tube 2 a déjà franchi le bord latéral aval 32 du transducteur 21 et on constate que les moyens électroniques 11 ont donc, par l'intermédiaire du câble de commande 37 mis en circuit le transducteur 21 au moment où l 'extrémité avant du tube 36 a atteint sur l'échelle des abscisses le point correspondant à 260 pixels grâce aux moyens de commutation figurés en 39. Ces mêmes moyens électroniques 11 assureront la mise en circuit des transducteurs suivants 22, 23, 24, lorsque l'extrémité avant 36 du tube 2 atteindra sur l'échelle des abscisses les points correspondant respectivement à 320, 380 et 440 pixels. De la même façon la mise hors circuit des quatres transducteurs sera effectuée à la fin du passage du tube 2 lorsque l'extrémité arrière de celui-ci atteindra successivement les points correspondant à 200, 260, 320 et 380 avec mise hors service dans le même ordre des quatre transducteurs sous l'action des moyens de commande 11 par l'intermédiaire des moyens de commutation 39. Comme le montre la figure 2, des moyens électroniques de liaison 40 assurent l'enregistrement des signaux reçus par les moyens de détection, c'est-à-dire les transducteurs sur une seule piste d'enregistrement 41. Cela n'a pas d'inconvénients car le pas d'avance du tube est sensiblement égal ou inférieur à la longueur de 40 mm occupée par les quatre transducteurs.

De plus, grâce à la mise en service de chaque transducteur seulement quand il est en regard de la paroi 25 du tube 2, on n'observe pas de signaux dûs à des perturbations provoquées par le passage des extrémités avant 36 ou arrière du produit long en regard d'un transducteur. On évite ainsi le risque de création d'un signal provoqué par une vague créée en avant du bord frontal du produit long, au contact de l'eau contenue dans le bac 26.

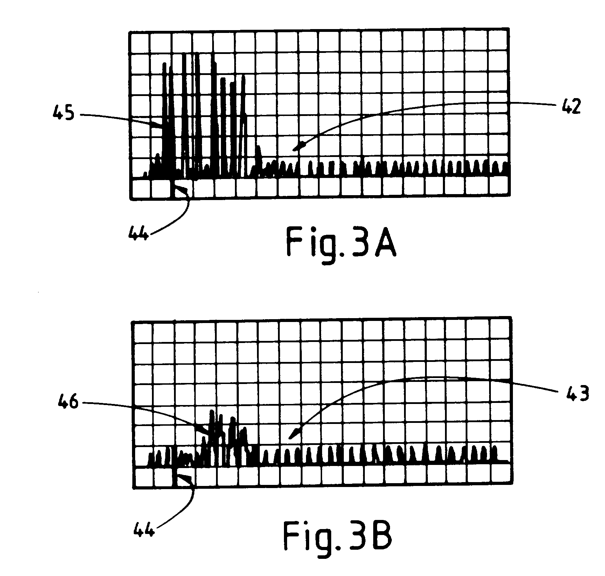

Les figures 3A et 3B montrent, dans le cas de la figure 3A, un enregistrement 42, effectué au moyen du dispositif représenté aux figures 1 et 2 avec l'enregistreur 41 mais avec mise en circuit de chaque transducteur avant que l'extrémité frontale du tube ait franchi le point repéré en pixels qui est au niveau du bord latéral aval du transducteur correspondant et qui est indiqué aux figures 3A et 3B par le repère 44. On voit sur la figure 3A que les perturbations 45 causées par le passage de l'extrémité avant 36 du tube se répercutent sur toute une zone de longueur sensiblement égale à la longueur occupée par le groupe de transducteurs 21, 22, 23, 24. Dans le cas de la figure 3B, on a fait défiler une deuxième fois le tube 2 en effectuant la mise en circuit de chaque transducteur dans les conditions conformes au procédé et au dispositif suivant l'invention. On constate alors que les perturbations causées par une mise en circuit prématurée ont disparu et que, par contre, un signal 46 parfaitement visible demeure. Ce signal 46 correspond effectivement à une courte fissure longitudinale qui avait été créée sur la paroi du tube à une distance de l'extrémité frontale d'environ 20 mm. Ce signal était masqué dans le cas de la figure 3A par les perturbations 45 causées par l'extrémité du tube.

Dans la pratique industrielle, on met en oeuvre de préférence plusieurs groupes de transducteurs à ultra-sons permettant de détecter non seulement les fissures ou défauts longitudinaux mais aussi des fissures ou défauts transversaux sous différents angles.

Comme cela a été précisé les moyens de détection peuvent être non seulement des transducteurs à ultra-sons mais aussi des moyens de détection utilisés dans des méthodes non destructives physiques permettant de provoquer des interactions entre des discontinuités existant dans la paroi du produit long et des moyens d'excitation adaptés, tels que par exemple des champs électro-magnétiques.

Pour réaliser le dispositif et mettre en oeuvre le procédé suivant l'invention, il suffit de pouvoir réaliser un groupe de moyens de détection comprenant des moyens de détection disposés latéralement par rapport à l'axe de défilement et côte à côte , la longueur de chacun de ces moyens étant relativement courte pour pouvoir détecter des discontinuités de petites dimensions.

## Revendications

1. Dispositif de contrôle de défauts présentés par des produits métalliques longs de révolution, par des méthodes non destructives physiques, comportant des moyens d'émission, des moyens d'excitation capables de provoquer des interactions avec ces défauts et au moins un groupe de moyens de détection de ces interactions, disposés latéralement, côte à côte, le long d'un axe de défilement du produit long entraîné par des moyens de translation et rotation d'un mouvement hélicoïdal relatif le long de cet axe, les moyens de détection constituant le groupe ayant même fonction, même structure et étant disposés pour la détection des défauts de même type dans la paroi (25) en regard du produit long autour de laquelle ils effectuent de façon relative des parcours adjacents en hélice caractérisé en ce que dans le but d'assurer le contrôle des zones d'extrémité avant (36) et arrière du produit long (2) une caméra CCD (1) dont l'axe optique est transversal par rapport à l'axe (X1-X1) de défilement du produit long qui traverse ainsi son champ d'observation, est reliée à des moyens électroniques (11) de mémorisation permettant de mettre en mémoire l'emplacement de chacun des moyens de détection (21, 22, 23, 24) du groupe (3) le long de l'axe de défilement (X1-X1), les positions repères de ces moyens de détection le long de l'axe de défilement (X1-X1) étant dans le champ d'observation de la caméra (1) et correspondant pour chaque moyen de détection à ses bords latéraux amont et aval, positions repères exprimées en pixels sur l'échelle des abscisses parallèle à l'axe de défilement (X1-X1) dans le champ de la caméra CCD (1) et en ce que les moyens électroniques (11) comportent des moyens de contrôle du passage à travers le champ (10) de la caméra CCD (1) de l'extrémité avant (36) puis arrière du produit long (2) et des moyens de commande (11, 37, 39) permettant la mise en circuit de façon indépendante de chacun des moyens de détection (21, 22, 23, 24) en le reliant au moyen d'enregistrement (41) du groupe (3), au plus tôt à l'instant où l'extrémité avant (36) du produit long (2) franchit le point de l'axe de défilement (X1-X1) dont l'abscisse en pixels correspond au bord latéral aval (32, 33, 34, 35) du moyen de détection (21, 22, 23, 24), les moyens de commande (11, 37, 39) permettant ensuite la mise hors-circuit de chacun des moyens de détection, au plus tard lorsque l'extrémité arrière du produit long (2) franchit le point d'abscisse en pixels correspondant au bord latéral amont (31, 32, 33, 34) de chacun des moyens de détection (21, 22, 23, 24).

2. Dispositif suivant revendication 1 caractérisé en ce que les moyens de commande (11, 37, 39) sont ajustés de façon que la mise en circuit de chacun des moyens de détection (21, 22, 23, 24) est effectuée avec un retard déterminé exprimé par un décalage défini exprimé en pixels sur l'axe des abscisses par rapport au point de franchissement par l'extrémité avant (36) du produit long du point correspondant au bord latéral aval du moyen de détection et en ce que la mise hors circuit de chacun des moyens de détection est effectuée avec une avance déterminée exprimée en pixels par rapport au point de franchissement par l'extrémité arrière du produit long du point correspondant au bord latéral amont de chacun des moyens de détection.

3. Dispositif suivant revendication 1 ou 2 caractérisé en ce qu'un moyen d'éclairage (7, 8) est disposé de façon à éclairer fortement le côté du produit long (2) qui est vu au passage dans le champ (10) de la caméra CCD (1) et en ce qu'on place un écran absorbant la lumière (9) dans ce même champ (10) au-delà de l'axe de défilement (X1-X1) par rapport à la caméra CCD (1).

4. Dispositif suivant l'une des revendications 1 à 3 caractérisé en ce que le groupe de moyens de détection est un groupe de moyens transducteurs à ultra-sons (3), chacun de ces moyens transducteurs comportant au moins un moyen d'émission d'ultra-sons et/ou au moins un moyen de réception d'ultra-sons combiné ou non avec le moyen d'émission dans un même transducteur.

5. Dispositif suivant l'une des revendications 1 à 3 caractérisé en ce que le groupe de moyens de détection comprend des moyens aptes à détecter les interactions entre les défauts d'un produit long avec des courants de Foucault ou avec des flux magnétiques.

6. Dispositif suivant l'une des revendications 1 à 5 caractérisé en ce que le produit long est un tube (2) métallique.

7. Procédé de détection de défauts dans des produits longs métalliques de révolution caractérisé en ce qu'il met en oeuvre un dispositif suivant l'une des revendications 1 à 6.

## Patentansprüche

1. Vorrichtung zur Prüfung von Fehlern an langen, metallischen kreisformingen , zylindrischen Gegenständen durch zerstörungsfreie physikalische Verfahren, bestehend aus Abgabemitteln, Erregermitteln, die geeignet sind, Wechselwirkungen mit diesen Fehlern zu verursachen, und mindestens einer Gruppe von Mitteln zur Erkennung dieser Wechselwirkungen, die nebeneinander seitlich entlang einer Durchlaufachse des langen Gegenstandes angeordnet sind, welcher durch Vorschub- und Dreheinrichtungen in einer schraubenartigen Bewegung zu und entlang dieser Achse bewegt werden, wobei die Erkennungsmittel, die die Gruppe bilden, die gleiche Funktion, den gleichen Aufbau haben und zur Erkennung der Fehler gleichen Typs in der Wand (25) gegenüber dem langen Gegenstand angeordnet sind, um den herum sie sich auf aneinandergrenzenden schraubenartigen Bahnen bewegen,
dadurch gekennzeichnet, daß für die Überprüfung des hinteren und vorderen Endbereichs (36) des langen Gegenstandes (2) eine CCD-Kamera (1), deren optische Achse quer zur Durchlaufachse (X1-X1) des langen Gegenstandes verläuft, welcher daher ihr Beobachtungsfeld durchläuft, mit elektronischen Mitteln (11) zur Speicherung verbunden ist, mit denen der Ort jedes der Erkennungsmittel (21, 22, 23, 24) der Gruppe (3) entlang der Durchlaufachse (X1-X1) gespeichert werden kann, wobei die Markierpositionen dieser Erkennungsmittel entlang der Durchlaufachse (X1-X1) sich im Beobachtungsfeld der Kamera (1) befinden und bei jedem Erkennungsmittel dessen vorderer und hinterer Seitenkante entsprechen, wobei diese Markierpositionen in Pixel auf der Abszisse ausgedrückt werden, die parallel zur Durchlaufachse (X1-X1) im Beobachtungsfeld der CCD-Kamera (1) verläuft, und daß die elektronischen Mittel (11) Mittel zur Überprüfung des Durchlaufs des vorderen Endes (36) und dann des hinteren Endes des langen Gegenstandes (2) durch das Beobachtungsfeld der CCD-Kamera (1) sowie Steuerungsmittel (11, 37, 39) umfassen, mit denen jedes der Erkennungsmittel (21, 22, 23, 24) unabhängig vom anderen zugeschaltet werden kann, wobei es mit dem Aufzeichnungsmittel (41) der Gruppe (3) frühestens in dem Augenblick verbunden wird, in dem das vordere Ende (36) des langen Gegenstandes (2) den Punkt der Durchlaufachse (X1-X1) überquert, dessen Abszissenwert in Pixel der vorderen Seitenkante (32, 33, 34, 35) des Erkennungsmittels (21, 22, 23, 24) entspricht, wobei mit den Steuerungsmitteln (11, 37, 39) sodann jedes der Erkennungsmittel spätestens dann abgeschaltet werden kann, wenn das hintere Ende des langen Gegenstandes (2) den Punkt der Pixel-Abszisse überquert, der der hinteren Seitenkante (31, 32, 33, 34) jedes der Erkennungsmittel (21, 22, 23, 24) entspricht.

2. Vorrichtung nach Anspruch 1,
dadurch gekennzeichnet, daß die Steuerungsmittel (11, 37, 39) so eingestellt sind, daß das Zuschalten jedes der Erkennungsmittel (21, 22, 23, 24) mit einer festgesetzten Verzögerung erfolgt, die sich in einer bestimmten Verschiebung ausdrückt, die auf der Abszissenachse in Pixel im Verhältnis zu dem Punkt ausgedrückt wird, an dem das vordere Ende (36) des langen Gegenstandes den Punkt überquert, der der vorderen Seitenkante des Erkennungsmittels entspricht, und daß das Abschalten jedes der Erkennungsmittel mit einem festgesetzten Vorlauf erfolgt, der in Pixel im Verhältnis zu dem Punkt ausgedrückt wird, an dem das hintere Ende des langen Gegenstandes den Punkt überquert, der der hinteren Seitenkante jedes der Erkennungsmittel entspricht.

3. Vorrichtung nach Anspruch 1 oder 2,
dadurch gekennzeichnet, daß ein Beleuchtungsmittel (7, 8) so angeordnet ist, daß es die Seite des langen Gegenstandes (2) stark beleuchtet, die beim Durchlauf durch das Beobachtungsfeld (10) der CCD-Kamera (1) betrachtet wird, und daß ein lichtabsorbierender Schirm (9) in diesem Beobachtungsfeld (10) von der CCD-Kamera (1) aus gesehen auf der anderen Seite der Durchlaufachse (X1-X1) angeordnet ist.

4. Vorrichtung nach einem der Ansprüche 1 bis 3,
dadurch gekennzeichnet, daß die Gruppe der Erkennungsmittel eine Gruppe von Ultraschallwandlern (3) ist, wobei jede dieser Wandlereinrichtungen mindestens ein Mittel zur Ultraschall-Abgabe und/oder mindestens ein Mittel zum Ultraschall-Empfang, das innerhalb ein und desselben Ultraschallwandlers mit dem Abgabemittel kombiniert oder nicht kombiniert ist, aufweist.

5. Vorrichtung nach einem der Ansprüche 1 bis 3,
dadurch gekennzeichnet, daß die Gruppe der Erkennungsmittel Mittel umfaßt, die geeignet sind, die Wechselwirkungen zwischen den Fehlern eines langen Gegenstandes und Foucaultschen Strömen oder Magnetflüssen zu erkennen.

6. Vorrichtung nach einem der Ansprüche 1 bis 5,
dadurch gekennzeichnet, daß der lange Gegenstand ein Metallrohr (2) ist.

7. Verfahren zur Erkennung von Fehlern an langen, kreisformigen zylindrischen Metallgegenständen,
dadurch gekennzeichnet, daß in ihm eine Vorrichtung nach einem der Ansprüche 1 bis 6 eingesetzt wird.

## Claims

1. Device for controlling detects in long metallic products generated by revolution by non-destructive physical methods, comprising emission means, excitation means capable of causing interaction with these defects and at least one group of means for detecting these interactions, which are arranged laterally side by side along an axis of travel of the long product driven by translation and rotation means with a relative helical movement along this axis, the detection means constituting the group having the same function and the same structure and being arranged so as to detect defects of the same type in the wall (25) of the long product facing the detection means around which wall they perform helical adjacent courses in a relative manner, characterized in that, to monitor the control of the front end zones (36) and rear end zones of the long product (2), a CCD camera (1) of which the optical axis is transversal to the axis (X1-X1) of travel of the long product which thus traverses its field of observation is connected to electronic memory means (11) allowing the position of each of the detection means (21, 22, 23, 24) of the group (3) along the axis of travel (X1-X1) to be stored, the reference positions of these detection means along the axis of travel (X1-X1) being in the field of observation of the camera (1) and corresponding, for each detection means, to its upstream and downstream lateral edges, the reference positions being expressed in pixels on the abscissa scale parallel to the axis of travel (X1-X1) in the field of the CCD camera (1) and in that the electronic means (11) comprise means for monitoring the passage through the field (10) of the CCD camera (1) of the front end (36) then rear end of the long product (2) and control means (11, 37, 39) allowing independent connection of each of the detection means (21, 22, 23, 24) by attaching it to the recording means (41) of the group (3), at the soonest at the moment when the front end (36) of the long product (2) reaches the point of the axis of travel (X1-X1) of which the pixel abscissa corresponds to the downstream lateral edge (32, 33, 34, 35) of the detection means (21, 22, 23, 24), the control means (11, 37, 39) then allowing each of the detection means to be disconnected, at the latest when the rear end of the long product (2) reaches the abscissa point in pixels corresponding to the upstream lateral edge (31, 32, 33, 34) of each of the detection means (21, 22, 23, 24).

2. Device according to Claim 1, characterized in that the control means (11, 37, 39) are adjusted in such a way that each of the detection means (21, 22, 23, 24) is connected with a predetermined delay expressed by a defined shift expressed in pixels on the axis of the abscisse relative to the point where the front end (36) of the long product reaches the point corresponding to the downstream lateral edge of the detection means and in that each of the detection means is disconnected with a predetermined advance expressed in pixels relative to the point where the rear end of the long product reaches the point corresponding to the upstream lateral edge of each of the detection means.

3. Device according to Claim 1 or 2, characterized in that an illuminating means (7, 8) is arranged so as to illuminate strongly the side of the long product (2) which is seen as it passes into the field (10) of the CCD camera (1) and in that a light absorbing screen (9) is placed in this same field (10) beyond the axis of travel (X1-X1) relative to the CCD camera (1).

4. Device according to one of Claims 1 to 3, characterized in that the group of detection means is a group of ultrasound transducer means (3), each of these transducer means comprising at least one ultrasound emitting means and/or at least one ultrasound receiving means which may or may not be combined with the emission means in the same transducer.

5. Device according to one of Claims 1 to 3, characterized in that the group of detection means comprises means capable of detecting the interactions between the defects in a long product with eddy currents or with magnetic fluxes.

6. Device according to one of claims 1 to 5, characterized in that the long product is a metallic tube (2).

7. Process for detecting detects in long metallic products generated by revolution, characterized in that it employs a device according to one of Claims 1 to 6.
